# EUROPEAN PATENT SPECIFICATION

(11) **EP 2 955 564 B1**
(45) Date of publication and mention of the grant of the patent: **09.08.2023**
(21) Application number: 15171937.4
(22) Date of filing: 12.06.2015
(51) Int. Cl.: B42D 25/328, B42D 25/337, G02B 30/56

(54) **OPTICALLY VARIABLE ELEMENT**
OPTISCH VARIABLES ELEMENT
ÉLÉMENT OPTIQUEMENT VARIABLE

(30) Priority: 13.06.2014 GB 201410620
(43) Date of publication of application: 16.12.2015
(73) Proprietor: OpSec Security Limited, Tyne and Wear NE38 0AD (GB)
(72) Inventor: VIZDAL, Petr, Salford, MS0 1BB (GB)
(74) Representative: Page White Farrer

(56) References cited:
- WO-A1-2011/079347
- WO-A1-2011/079347
- WO-A2-01/44858
- WO-A2-2010/005706
- US-A1- 2004 068 417
- US-S- D 696 492

## Description

### FIELD OF THE INVENTION

The present invention relates to an optically variable element comprising first optical sub-elements and second optical sub-elements, and methods suitable for producing the optically variable element.

### BACKGROUND TO THE INVENTION

Optical elements, such as holograms or optically variable (such as diffractive, reflective, or refractive) elements, have long been used for a variety of purposes. For example, they may be found as decorative elements on a variety of goods, or to provide graphical information. A frequently used application of optical elements is as security elements. For example, they may be incorporated into banknotes, tax stamps, ID cards, passports, government documents and any other documents or products and branded goods whose origin requires authentication.

There are a variety of optical elements (and a variety of ways of forming those optical elements) that are suitable for these applications. For example, see United States patent application publication number US 2011/0310485 A1, which describes use of visual effects for anti-counterfeit purposes and/or United states patent application publication number US 2013/0163897 A1, which describes a composite image pattern for authentication and/or security applications. The use of axicons and diffractive lenses is also known (see Rudolf L. van Renesee: "Optical Document Security", Second edition, Artech House, 1998 and Jorge Ojeda-Castaneda, Carlos C. Gomez-Reino (Eds.): "Selected Papers on Zone Plates", MS128, SPIE, 1996).

Many of the optical elements carry graphical information, for example in a form of a text, company logo, an original artwork, which can be recognized by the public. Such an image is typically variable in its appearance, for example upon tilt, change of direction of incident light or change of illumination conditions. The appearance may vary via a change of colour, a dynamic motion, objects floating in a space or as an image of a three-dimensional object, where the angle of view determines the viewpoint of the three-dimensional object in the image. Similarly to printed graphics, the described optical elements are typically planar, i.e. they are substantially flat, and can be part of or be attached to a flat or curved surface of another object, such as for example document, label, coin, banknote, decorative object etc., or be a standalone object such as for example a self-adhesive label. However, variable or three-dimensional appearance makes such optical elements clearly distinct from conventional printed images or features.

Certain types of optical elements provide an exact image of an object based on an imitation of optical properties of a surface of that object. The object is typically of a relief type, such as for example a relief on a coin. Various embodiments of such elements are described in patent publications. For example, WO2006013215A1 describes the imitation of a three-dimensional image formed by a system of diffractive zones with changing periodicity and orientation, to deflect light to the same directions as if reflected from an original three-dimensional scene or object, and arranged such to produce substantially achromatic appearance. US20060056065A1 describes an optically variable element of a lens-like configuration producing a three-dimensional sensation of various three-dimensional free-form surfaces. WO2011079347A1 describes the decomposition of a three-dimensional surface into contours, which keep the profile of the original surface, or WO1990008338A1 describes a technique of producing a smooth appearance of three-dimensional images by an array of reflective micro-facets arranged on a substantially flat surface.

However, there is still a requirement for providing improved optically variable elements, which may be used in the above-described applications. It is an aim of the present invention to provide an arrangement of optical sub-elements forming an optically variable element, or a part of an optically variable element, that may have improved facility when compared with known optically variable elements, when used in the above-described applications (in particular when used for improved security in security applications, or improved graphical elements, or improved decorative elements).

DE 10 2008 049 513 A1 discloses a grid image having two or more achromatic grid fields including a visual appearance image dependant on the viewing angle, each field containing a grid pattern composed of a plurality of straight grid lines.

US 2004/0068417 A1 discloses a computer-based system and method for grading gems by their inherent shape and colour, including hue-tone-saturation. The system comprises a personal computer having a storage device, an operating system, a colour calibrated screen, an Internet browser and Web communication means. A pre-prepared database of gem 3D cuttings and ranges of colour gamut, represented by hue-tone-saturation combinations, reside in said storage device. The method of gem grading is interactive, by which the user is comparing a target gem to be evaluated, which is presented on the computer colour screen, to an image of a synthetic gem of the same cut which is gradually built-up by the user in hue, tone and saturation to visually match the target gem.

### SUMMARY OF THE INVENTION

The present invention is defined by the appended independent claims. Certain more specific embodiments are defined by the dependent claims.

The inventor has determined that an optically variable element, which is configured to produce a three-dimensional image wherein the image comprises an arrangement of facets, provides significant advantages over known optically variable elements. Optically variable elements that are configured to produce three dimensional images with specifically (topologically) defined surface features such as facets are novel, and such images have a significant decorative and security advantage, not least because they are distinctive and more complex to design than known non-faceted images.

In accordance with one aspect of the invention as defined in claim 1, there is provided a planar optically variable element comprising:
a plurality of first optical sub-elements, the optical properties of the first optical sub-elements being configured to cooperate to form a three-dimensional image of an arrangement of facets when light is incident thereon; wherein:
the three-dimensional image is a three-dimensional image of an arrangement of facets;
the first optical sub-elements are arranged in a two-dimensional polygonal grid, wherein each of the first optical sub-elements has a boundary corresponding to a projection of a boundary between facets of the three-dimensional image such that each first optical sub-element corresponds to a respective facet of the arrangement of facets in the three-dimensional image;
each of the first optical sub-elements has at least one dimension of at least 0.1 mm;
the first optical sub-elements are comprised of a micro-structure of at least one of: a reflection diffraction grating; a transmission diffraction grating; a micro-prism; and a micro-mirror;
   the planar optically variable element further comprises second optical sub-elements,
   the optical properties of the second optical sub-elements being configured to provide an image,
the second optical sub-elements are elongate; and
the second optical sub-elements are overlaid over selected boundaries between first optical sub-elements.

The second optical sub-element of the planar optically variable element as claimed in claim 1, may comprise a structure capable of providing an image comprising at least one of: diffractive image, a concealed image, a kinetic image, a polarized image and a covert laser readable image.

The second optical sub-element of the planar optically variable element as claimed in claim 1 or claim 2 may comprise a structure capable of providing an image comprising at least one of: nanotext, microtext, micrographics, and nanographics.

The plurality of first optical sub-elements of the optically variable element as claimed in any of claims 1 to 3 may be formed on the optically variable element by: defining a three-dimensional surface; creating an array of nodes on the three-dimensional surface; using the nodes to define a plurality of facets such that the plurality of facets form said arrangement of facets, the arrangement of facets approximating the three-dimensional surface; projecting the surface area of each facet of said arrangement onto a plane defined by the optically variable element; and forming the plurality of first optical sub-elements by incorporating a unique optically active structure into each projected surface area.

Forming the plurality of first optical sub-elements may further comprise configuring the optical properties of each unique optically active structure to be indicative of the light that would have been reflected, refracted, transmitted, absorbed, polarized and/or diffracted from the facet in said arrangement of facets associated with that unique optically active structure.

The optically variable element as claimed in any of claims 1 to 4 may be configured to provide one or more further three-dimensional images when light is incident thereon. Optionally, the one or more further three-dimensional images may be provided by the plurality of first optical elements having interlaced microstructures configured for providing the one or more further three-dimensional images, or alternatively wherein the one or more further three-dimensional images are provided by one or more further pluralities of first optical sub-elements, the optical properties of the one or more further pluralities of first optical sub-elements being configured to cooperate to form one or more further three-dimensional images. Optionally, the first optical sub-elements are configured such that at least one of the three-dimensional images is superposed over another of the three-dimensional images, or alternatively wherein the first optical sub-elements are configured such that at least one of the three-dimensional images does not overlap with at least one other of the three-dimensional images.

The second optical sub-elements of the optically variable element as mentioned above may be comprised of a micro-structure of at least one of: a reflection diffraction grating; a transmission diffraction grating; a micro-prism; and a micro-mirror.

Another aspect of the invention, as defined in claim 10, provides a device or object comprising an optically variable element according to the invention. The device or object may be a security object or device, a decorative object or device, and/or may be an object or device for graphical presentation of information. The device or object according to either of these embodiments may be in the form of a sticker and/or a layer of foil.

Still another aspect of the invention, as defined in claim 11, provides a method for producing a planar optically variable element. The method comprises:
providing a plurality of first optical sub-elements, the optical properties of the first optical sub-elements being configured to cooperate to form a three-dimensional image of an arrangement of facets when light is incident thereon, wherein each first optical sub-element corresponds to a facet of the arrangement of facets in the three-dimensional image, and has at least one dimension of at least 0.1 mm;
wherein providing the plurality of first optical sub-elements comprises:
   defining a three-dimensional surface;
   creating an array of nodes on the three-dimensional surface;
   using the nodes to define a plurality of facets such that the plurality of facets form said arrangement of facets, the arrangement of facets approximating the three-dimensional surface;
   projecting the surface area of each facet of said arrangement onto a plane defined by the planar optically variable element;
   forming the plurality of first optical sub-elements by incorporating an optically active structure into each projected surface area;
   wherein the method further comprises providing second optical sub-elements, the optical properties of the second optical sub-elements being configured to provide an image,
   wherein the second optical sub-elements are substantially elongate; and
   wherein the second optical sub-elements are located over selected boundaries between first optical sub-elements; and
   wherein the first optical sub-elements are comprised of a micro-structure of at least one of: a reflection diffraction grating; a transmission diffraction grating; a micro-prism; and a micro-mirror.

The second optical sub-elements of this method are configured to form an image superposed over at least a portion of the three-dimensional image. The method of such a second optical element so configured may further comprise configuring the optical properties of each unique optically active structure in each first optical sub-element to be indicative of the light that would have been reflected or diffracted from the facet in said arrangement of facets associated with that unique optically active structure.

The second optical sub-elements of the method may further comprise a micro-structure selected from a reflection diffraction grating, a transmission refraction grating, a micro prism, and a micro-mirror.

### FIGURES

Embodiments will now be described, by way of example only, with reference to the following examples and accompanying drawings, in which:
Figure 1 shows an embodiment of an optically variable element with first and second optical sub-elements and their boundaries;
Figures 2A and 2B illustrate a primary three-dimensional object (smooth) and the same object with nodes and mesh lines;
Figure 3 illustrates a three-dimensional multi-faceted construct of the primary object of Figure 2;
Figure 4 shows a cross-section of the three-dimensional multi-faceted construct of Figure 3;
Figure 5 shows a cross section of an optically variable element for imaging the three-dimensional multi-faceted construct of Figure 4;
Figure 6 is a flow chart illustrating at least part of the method suitable for forming the optically variable element of Figure 1;

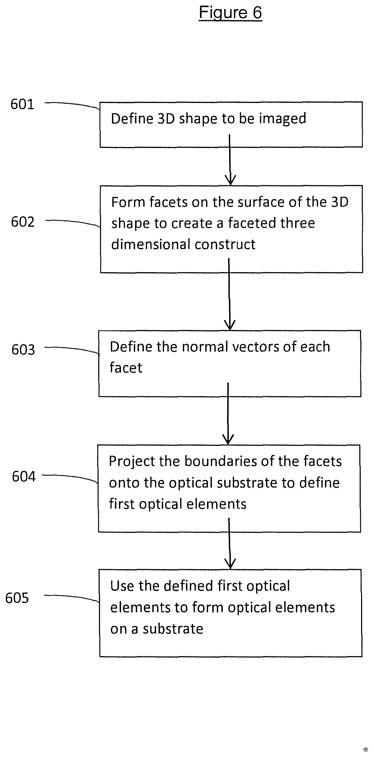

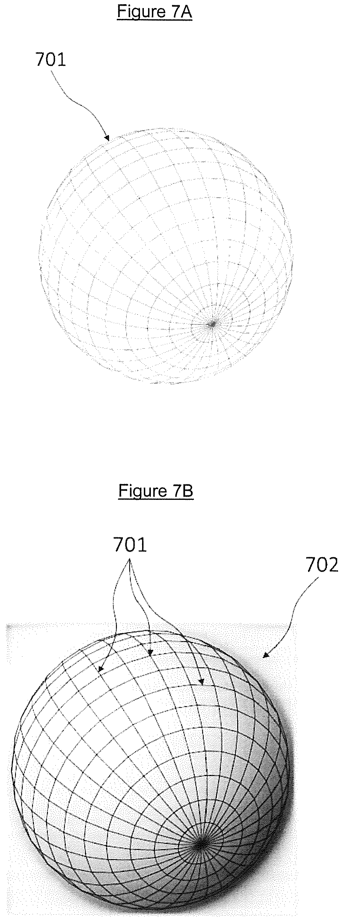

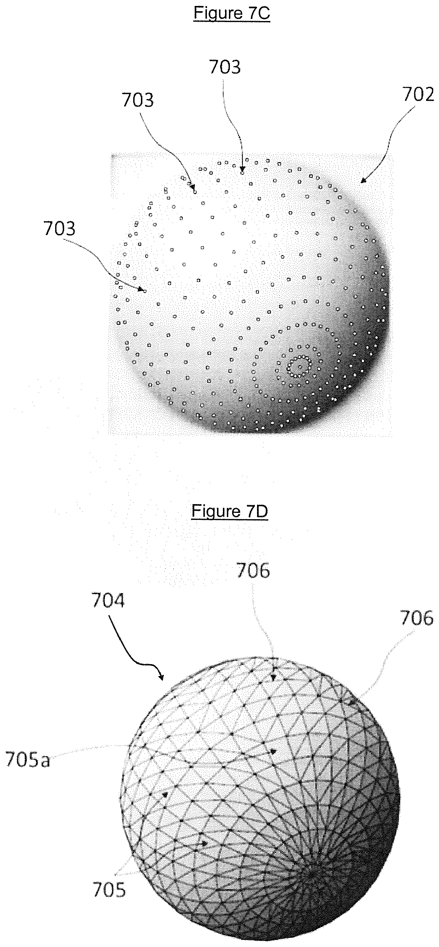

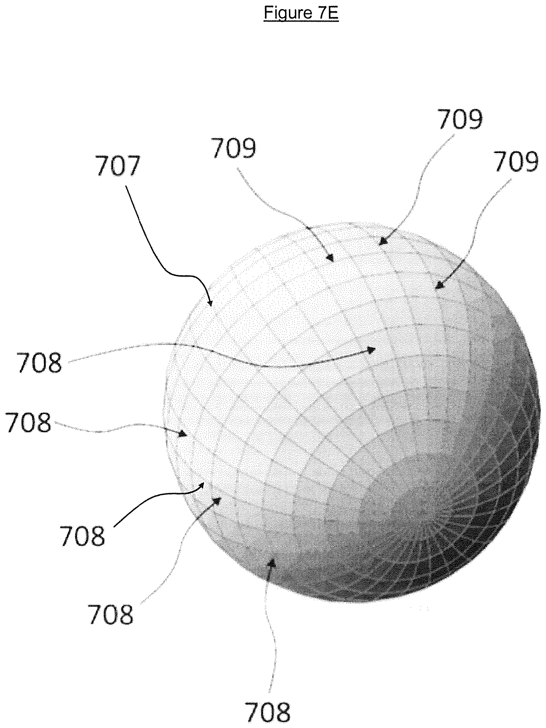

Figures 7A to 7E illustrate steps of a method alternative to the method associated with Figure 6; Figure 7A shows a designed set of second optical sub-elements (701); Figure 7B shows a three dimensional computer generated (smooth) object (702) underlying the designed set of second optical sub-element; Figure 7C shows the smooth object with nodes (703) (in this case the nodes are selected to represent the intersections of the lines in the set of second optical sub-elements); Figure 7D shows a three-dimensional multifaceted construct (704) with multiple facets (705 and 705a) and facet boundaries (706); Figure 7E shows the corresponding optically variable element (707) with its first optical sub-elements (708) and second optical sub-elements (709); and
Figures 8A to 8D illustrate steps of the method associated with Figure 6 in a similar manner to Figure 7A-&E, but in the case of a different shaped polygonal mesh, and different arrangements of facets and second optical sub-elements.

### DETAILED DESCRIPTION

The following describes optically variable elements suitable for graphical, decorative and/or security applications, and their formation. The optically variable element comprises a set of first optical sub-elements, which upon illumination provide a three-dimensional multi-faceted image. Typically, the three-dimensional multi-faceted image is an image of a three-dimensional multi-faceted construct, which is itself a representation of a three-dimensional object or surface. This three-dimensional object or surface may be a real object, or a computer-generated object, depending upon the application envisaged. In a typical example, the object may be a three dimensional shape, such as a sphere, or part of a sphere, but in other cases it may be a real object (or a digitized real object) such as an apple, a car, a flag, an animal or any other object appropriate for the use involved.

In order to aid in the interpretation of this specification, some useful terms will be explained in more detail.

### Three-dimensional object or surface.

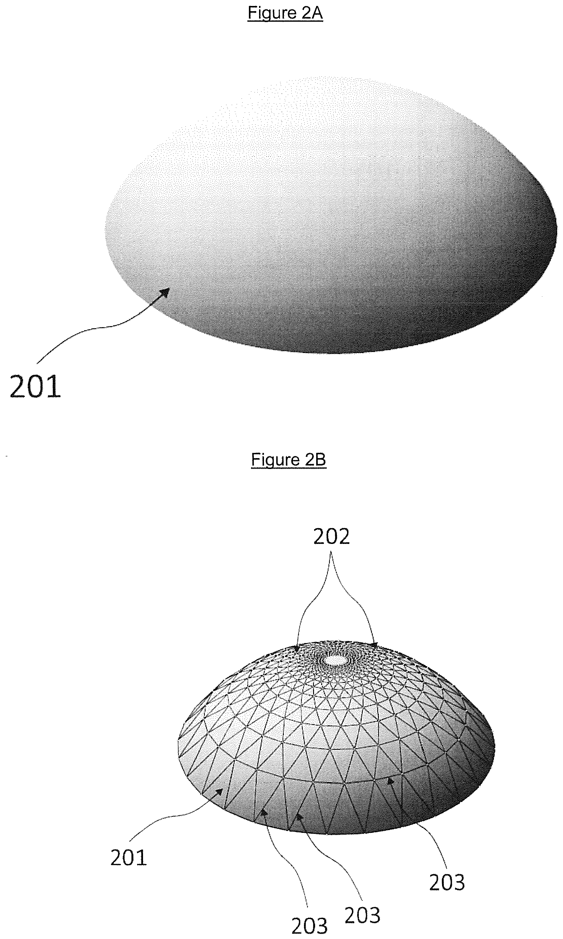

The three-dimensional object or surface which is typically the starting point for the final image (herein called the "base" or "primary" or "source" three-dimensional object or surface) may, as has been explained above, be a real object, or may be a computer generated three-dimensional object or surface. Typically the primary object may be represented by a smooth manifold. Typically if a real object is to be employed as a starting point, it is usually 'computerized', for example by 3D scanning methods. Obviously a computer generated source can avoid this step. Such a primary object is depicted in Figure 2A.

### Three-dimensional multi-faceted construct

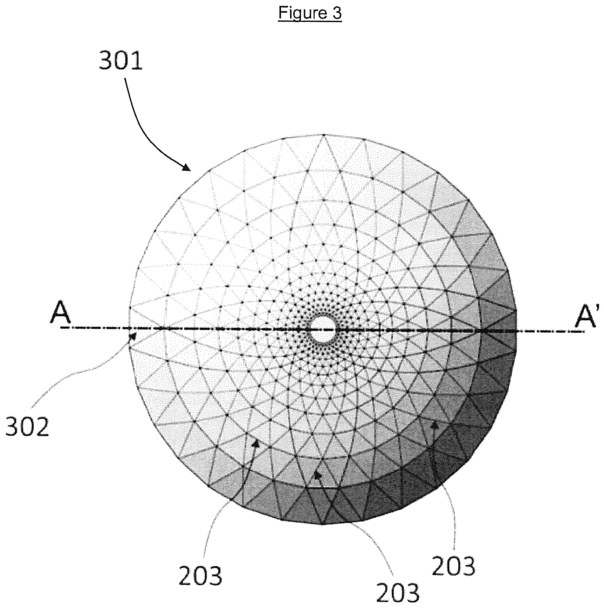

The three-dimensional multi-faceted construct herein is a transformation of the primary three-dimensional object or surface into a three-dimensional multi-faceted object or surface. That is to say, a three-dimensional multi-faceted construct is an abstraction or representation of the real or computer generated base three-dimensional object or surface. The three-dimensional multi-faceted construct can be made in infinite number of ways, since there are an infinite number of sizes and orientations that can be chosen for the facets. The skilled person may choose how the final multi-faceted shape of the construct should look, depending upon the particular use envisaged. A three-dimensional multi-faceted construct is depicted in Figure 3.

It will be apparent from the above that facets are units, or building blocks, of the surface of the three-dimensional multi-faceted construct. There is no particular limitation on how the facets may be chosen to represent the base three-dimensional object or surface. Facets may be different sizes, and not necessarily the entire surface of the base object need be represented by facets. For example, some facets may be absent in the image in order to provide a selected 'pattern' of present and absent facets in the image. This pattern is not especially limited, and may be for example a "chequerboard" appearance, or a "striped" appearance, etc. Furthermore, the angles between the facets may be varied from the angles initially created (e.g. by changing the position of nodes used to define the facets if desired - see below).

In preferred methods of the invention, facets can be constructed from nodes, i.e. selected points on the base three-dimensional object or surface, by connecting at least three nodes into a polygonal shape. In this method, it is not especially limited which nodes are chosen, provided that there are sufficient nodes to ensure that the final image is a reasonably recognisable representation of the source object. However, in order to define clear facets, in particular if more than three nodes are employed per facet, all nodes defining the polygonal shape of a specific facet should lie in the same plane. A vector normal to each plane defines the orientation of each facet in three-dimensional space. Typically, the direction of the normal is determined such that it is parallel to the normal to the equivalent point of the surface of the base object. However, (as stated above) the angles between the facets may be allowed to deviate from this if desired (e.g. by varying the position of the nodes by a small amount), in order to give the final three-dimensional faceted image a degree of unevenness, which may be desirable in some embodiments, depending upon use.

Typically all nodes and their connections defining the boundaries of the facets on the three-dimensional multi-faceted construct can be connected to form a polygonal mesh. In the present context, the lines connecting nodes are called mesh lines. These are depicted in Figure 2B. It is not particularly limited how the mesh lines are chosen provided that all the nodes are connected to at least two other nodes. A single set of nodes may be connected by mesh lines in many different ways, to form many different polygonal meshes. Specific meshes may be chosen depending upon the shape and size of the facets which are desired in the final image. However, in typical embodiments the most simple, or natural mesh is chosen. Typically this is a mesh having the shortest connections between adjacent connected nodes. In the present context, this is termed a "primary", or "1^{st} order" polygonal mesh.

In mathematical terms, since there is freedom to choose any polygonal mesh, the boundaries (mesh lines) in the broadest sense may be seen as connections drawn on a smooth manifold representing the base three-dimensional object. In consequence, the facets may be defined in any way. For example, the facets may be defined using computer software for generating meshes, such as those used in finite element analysis programs. In an embodiment, the three-dimensional image appears to be composed of a plurality of planar facets.

### Optically variable element

The optically variable element comprises first optical sub-elements, and second optical sub-elements. The first optical sub-elements are designed to provide a three-dimensional image of a multi-faceted construct. The second optical sub-elements are designed to provide a further image preferably having an elongate feature.

Thus, an optically variable element is a real object, with a substantially planar two-dimensional (2D) surface, designed to provide a three-dimensional image (3D) of the three-dimensional multi-faceted construct upon illumination, in some cases overlaid with an image formed by substantially one-dimensional (1D) (i.e. elongate, typically linear or line-type) objects.

In the optically variable element of the invention, each first optical sub-element upon illumination provides a three-dimensional appearance or image of each corresponding facet of the three-dimensional multi-faceted construct. In this case, the boundaries between each of the first optical sub-elements in the two dimensional surface of the optically variable element correspond to projections of the boundaries between the facets of the three-dimensional multi-faceted construct onto the two-dimensional surface of the optically variable element. This forms a two dimensional polygonal grid (the polygonal grid can be seen as a projection of the three dimensional polygonal mesh as described above onto the two-dimensional surface of the optically variable element).

The second optical sub-elements are elongate or substantially one-dimensional optical elements, overlaid over selected boundaries between the first optical sub-elements (i.e. selected lines of the polygonal grid). Upon illumination, these second optical sub-elements provide typically different visual appearance than the first optical sub-elements.

As has been mentioned, the optically variable element further comprises at least one second optical sub-element. The optical properties of the at least one second optical sub-element are configured to provide an image, with substantially elongate features. The elongate features are features having a width which is substantially smaller than their respective length. Thus, the features are "thin" or substantially one-dimensional, and may comprise, for example, one or more lines. In preferred embodiments the optically variable element comprises a plurality of second optical sub-elements, the plurality of second optical sub-elements forming an array overlying the first optical sub-elements. The array may, for example, comprise a plurality of second optical sub-elements which are situated along the boundaries between the first optical sub-elements, and/or which form a pattern (such as a guilloche pattern) and/or which form text or words or the like. This will be explained in more detail further below. In addition to second optical sub-elements being located at the boundaries between the first optical sub-elements, there may also be second optical sub-elements overlying former optical sub-elements that do not predominantly overlie the boundaries between the first optical sub-elements.

In all aspects of the present invention, the at least one second optical sub-element is located along at least part of a boundary of a first optical sub-element. In some embodiments, the second optical sub-elements are all located along the boundaries between the first optical sub-elements. In these embodiments, the image provided by the second optical sub-elements comprises elongate features that follow the boundaries (all or most of them) between the facets of the three dimensional image provided by the first optical sub-elements. In some cases these elongate features will help to highlight the facet boundaries which can significantly enhance the appearance of the two images in combination. It will be clear from this that the second optical sub-element is configured to form an image superposed over at least a portion of the three-dimensional image provided by the first optical sub-elements.

As has been mentioned, in all of the aspects of the present invention, it is preferred that the image provided by the second optical sub-elements comprises elongate features in the form of a pattern. Such a pattern may be, for example to highlight the boundaries of facets, or a decorative pattern, or a pattern for enhancing security (such as a guilloche pattern, or such as text, e.g. a signature or the like). It may be preferred that these elongate features comprise at least one of: nanotext, microtext, a concealed image, diffractive image, polarized image, a kinetic image and a covert laser readable image.

In the present invention, the presence of the first optical-sub elements has been discussed in relation to the provision of an image of a three dimensional construct, (and in the case of the first aspect a three-dimensional multi-faceted construct). However, the invention is not limited to the provision of only a single such image, and two or more such images may be provided in some cases. Accordingly, in some embodiments the optically variable element further comprises a second plurality (or a third plurality etc. as the case may be) of first optical sub-elements, the optical properties of the second plurality of first optical sub-elements being configured to cooperate to form a second three-dimensional image (in the first aspect of an arrangement of facets) when light is incident thereon, at least one of the three-dimensional images being superposed over the other three-dimensional image in dependence on the angle of incident light.

In more detail, the optically variable element according to this invention usually provides visualization of one 3D/1D image, i.e. three-dimensional multi-faceted construct object combined with embedded triangular or polygonal grid overlaid with substantially one-dimensional second optical sub-elements. However, more complex embodiments of the invention can combine multiple images sharing a portion of, or the entire area of the element's two-dimensional surface.

In some embodiments two 3D/1D images can share the same triangular or polygonal structure, however the optical properties of the first and/or second optical sub-elements may be defined such that they provide the appearance of more than one image. If the optical properties of a given first and/or second optical sub-element are defined such that it deflects light into several different directions (as described above), each direction can be associated with a different 3D/1D image.

Depending on the angular difference between these directions different 3D/1D images can be perceived by the observer as overlapping (as if one or more images are partially transparent). This would be the case if the angular difference were small. Alternatively, these images can be visible as separate from different viewing angles, which may provide a multichannel switch effect. This would be the case if the angular difference were larger.

In other embodiments two or more 3D/1D images do not share the same triangular or polygonal structure, and instead they form their own structure. In such cases, each image created by the same optically variable element occupies only a certain portion of the surface of the optically variable element assigned to it. This may be achieved using interlace or masking techniques known in the field.

In the present invention, an optically variable element can be realized in a reflective or transmissive form, i.e. the optical properties of the projected facets (first optical sub-elements) and/or second optical sub-elements is substantially reflective (e.g. reflection gratings, micro-mirrors) or transmissive (e.g. transmission gratings, micro-prisms) respectively. In certain cases the optically variable elements according to the invention can be made as a combination of both transmission reflection forms.

In the present invention, the first and/or second optical sub-elements may comprise any type of optically active structure capable of processing light to form the required three-dimensional image and/or the required image comprising an elongate feature. Typically the structure of the first and/or second optical sub-elements may comprise at least one or more of: a transmissive diffraction grating; a reflective diffraction grating; diffraction grating with antireflective and/or absorbing properties (typically high frequency grating); polarizing diffraction grating or microstructure, a micro-prism; and a micro-mirror. The optically active structure may provide chromatic or achromatic perception. In other words, the optically active structure may be configured to display a full spectrum of colours for a given configuration of incident light or the diffraction grating may be configured to display a selected range of colours, or a single colour, for a given configuration of incident light. The chromaticity of the optically active structure may be suppressed using known techniques. Examples of such techniques are combination of 'RGB' periods and the like in the diffraction grating, the addition of 'noise' to the diffraction grating and a combination with another diffractive structure. The optically active structure may comprise straight-line gratings. The optically active structure may have an asymmetrical performance across the optically active structure (i.e. asymmetric performance in opposite diffraction orders). The different optical properties may be configured to give a particular effect, such as a dispersive rainbow pattern across the first or second optical sub-element.

The optical function of first optical sub-elements will be discussed briefly. The area of each projected facet (first optical sub-element) is typically filled with a microstructure pattern which deflects incident light into a direction similarly as if the light would be deflected from the original three-dimensional multi-faceted construct. Contrary to typical known solutions, where the zonal or lens-like structure characteristics smoothly changes from location to location, the microstructure patterns filling the individual projected facets (first optical sub-elements) change their characteristics abruptly at the boundaries, i.e. do not create smooth transitions from one projected facet (first optical sub-element) to another.

Different types of the microstructure pattern can be used to fill the projected facet (first optical sub-element) areas such as, for example, (a) an array of micro-mirrors with their normal vector identical to the normal vector of the original facets, or (b) a diffraction grating deflecting light into a preferred diffraction order propagating in a direction identical or similar to the direction of light which would be deflected from the original facet.

The micro-mirrors in the array can be arranged in a regular pattern (or grid) or arranged quasi-randomly or randomly.

In some cases the array of micro-mirrors can consist of mirrors with several normal vectors to deflect light into multiple distinct directions to allow visibility of the same object preferentially from several different directions. In other cases the array can consist of mirrors with a plurality of different normal vectors, so that the light is deflected in a fan or cone of deflected light to imitate the diffuse character of deflected light.

The dimensions of the facets in the image provided by the optically variable element may be selected depending upon the use envisaged. However, the facets have at least one dimension of at least 0.1 mm, so that the facets are sized in order that the boundary between facets is discernible to the naked human eye of a viewer of the optically variable element. By naked human eye of a viewer, this is understood to mean a viewer viewing the optically variable element with a visual acuity of 20/20 (in the standard foot measurement).

Similarly, the diffraction grating can also be designed such to deflect light into several preferred directions or in a fan or cone of directions. This can be achieved by patterning the grating lines (creating so called two-dimensional grating pattern) or using plurality of gratings of different pitches and/or line orientations across the projected facet (first optical sub-element) area.

A plurality of gratings with multiple pitches or a variable pitch grating filling the projected facet (first optical sub-element) area can be used to suppress chromaticity of deflected light and provide rather colour-less appearance of the faceted object (i.e. three-dimensional multi-faceted construct), or on the contrary to enhance one or more colours of light deflected into a desired direction.

A plurality of gratings can be arranged within a projected facet (first optical sub-element) in a regular, quasi-random or random grid.

A diffraction grating with an asymmetric arrangement of grating lines and/or asymmetric modulation of the grating lines can be used to enhance diffraction efficiency of deflected light. Such an asymmetric arrangement of lines is typical for volume phase type gratings which may consist of plurality of slanted grating lines in a grating medium. A surface relief of grating with a sawtooth profile is an example of asymmetric modulation of grating lines.

The optical function of second optical sub-elements will now be briefly discussed. As stated above second optical sub-elements comprise an optically active structure capable of providing an image comprising an elongate feature. A typical representative of such an optically active structure is a linear diffraction grating diffracting light into a desired direction.

The diffraction grating can be uniform along a second optical sub-element i.e. having constant period and specific orientation of grating lines. Individual grid lines can be filled with diffraction gratings of different parameters (line period and orientation) providing a wide range of effects typical for variable image devices known by anybody knowledgeable in the technical field, such as for example motion effects, multichannel switch effects, etc.

In other cases the second optical sub-element can comprise a plurality of different gratings (i.e. gratings of different period and/or orientation) providing for example, a motion effect, or supressing chromatic appearance, or enhancing a colour.

In general, the second optical sub-element can also carry more complex grating structures, such as two-dimensional grating patterns, curved grating lines, grating lines with a specific modulation line profile (typically asymmetric), grating lines with variable period, etc.

In other cases, the second optical sub-elements can comprise microstructures such as micro-mirrors, nano-structures (such as, for example, antireflective, absorbing, polarizing or plasmonic structures) performing a specific optical function. In addition to this function, the microstructures can be further structured graphically, carrying a specific graphic pattern or text either in positive or negative form. By positive form it is meant that the graphic features or the text forming the second optical sub-element provide visual appearance or effect, while by negative form it is meant that the surrounding of the graphic features or text forming the mesh line provides visual appearance or effect.

In a special case some of the second optical sub-elements may have inner structure which does not provide visual effect, such as un-patterned nano or micro graphic features, or the second optical sub-elements can be free of any pattern and provide a dark background (void) in a three-dimensional image.

The optically variable element is planar. It will be appreciated that the optically variable element of the present invention is designed to be used in an optically variable device, or an optically variable object. Typically, but not exclusively, this is a security object or device, a decorative object or device, and/or is an object or device for graphical presentation of information. In preferred embodiments the optically variable element may be part of, or may be attached to, a flat or curved surface of another object, such as for example a document, a label, a coin, a banknote (such as in the form of a layer of foil), a decorative object etc. Alternatively, the optically variable element may be a stand-alone object such as for example a self-adhesive label, or a sticker. The variable or three-dimensional appearance makes such optical elements clearly distinct from conventional printed images or features.

Also provided is a method for producing an optically variable element comprising:
- providing a plurality of first optical sub-elements, the optical properties of the first optical sub-elements being configured to cooperate to form a three-dimensional image of an arrangement of facets when light is incident thereon;
- providing at least one second optical sub-element, the optical properties of the at least one second optical sub-element being configured to provide an image,
wherein each first optical sub-element corresponds to a facet of the arrangement of facets in the three-dimensional image, and wherein the at least one second optical sub-element forms an image comprising a substantially elongate feature.

In the method of the invention, the plurality of first optical sub-elements are formed on the optically variable element by:
defining a three-dimensional surface;
creating an array of nodes on the three-dimensional surface;
using the nodes to define a plurality of facets such that the facets form a representation of the three-dimensional surface (i.e. three-dimensional multi-faceted construct);
projecting the surface area of each facet in the representation onto a plane defined by the optically variable element;
forming the plurality of first optical sub-elements by incorporating an optically active structure into each projected surface area; and
forming at least one second optical sub-element by incorporating an optically active structure into an area selected for the second optical sub-element, wherein this area overlays a border between adjacent first optical sub-elements.

In the above method, the step of using the nodes to define a plurality of facets such that the facets form a representation of the three-dimensional surface may typically involve creating a polygonal mesh by connecting the nodes. Furthermore, the step of projecting the surface area of each facet in the representation onto the plane defined by the optically variable element serves to define the boundaries between the first optical sub-elements. This may be achieved by projecting the polygonal mesh onto the plane defined by the optically variable element to form a polygonal grid, where the boundaries are defined by the grid lines.

Once the boundaries have been determined, the step of forming the plurality of first optical sub-elements may be achieved by firstly selecting the optical properties of each sub-element such that the three-dimensional image is provided as desired. This may typically involve for each first sub-element selecting the direction of the deflection (or reflection, diffraction or refraction) of light incident on that sub-element. The quality of the visual appearance of the image is typically selected for each first sub-element (e.g. its reflective or transmissive appearance). Further, the type of microstructure is selected for each first sub-element (such as diffraction grating, micro-mirror or micro-prisms). Finally, the actual structural differences between each micro-structure used must be selected to provide the necessary chosen effects. The optically active structure of each first optical sub-element may be the same or different from any one or more of the other first optical sub-elements. In some embodiments, the optically active structure of each first optical sub-element may be unique. Similarly, the optically active structure of each second optical sub-element may be the same or different from any one or more of the other second optical sub-elements. In some embodiments, the optically active structure of each second optical sub-element may be unique. In this context, the term unique is used to indicate that the optically active structure of an optical sub-element is uniquely designed to give a particular optical effect when light is incident thereon in a given configuration.

An alternative to this method is also provided. In the alternative, a first step comprises providing a design for an arrangement of second optical sub-elements which provides a desired image, and then providing a base object underlying the design. The Figures 7A thru 7E) illustrate this alternative approach:
7A - In the first step arrangement of second sub-elements is designed which would provide a desired image (typically an image comprising line type features).
7B - A three-dimensional base object is designed such that it suitably underlays the designed arrangement of the second optical sub-elements.
7C - Nodes are generated on the three-dimensional base object such that their positions fall into intersections of lines in the arrangement of second optical sub-elements.
7D - Polygonal mesh is formed from the nodes defining facets of the three-dimensional multi-faceted construct.
7E - Polygonal mesh is projected onto the surface of the optically variable element forming boundaries of the first optical sub-elements to which optical properties are assigned such to form three-dimensional image of the three-dimensional multi-faceted construct, and which are overlaid by arrangement of second optical sub-elements to form final optically variable element.

The preferred embodiments described in relation to the optically variable element aspect of the invention apply *mutatis mutandis* to the method aspect of the invention.

It will be clear that known techniques may be used to create a master copy of the optically variable element, and the method is not especially limited. One such preferred method is electron beam lithography. Other origination methods of creating the optically variable element according to the above include, but are not limited to, laser beam lithography, laser interferometry, grayscale lithography and photo/UV mask lithography. The inner micro structure of the optical sub-elements corresponding to facets or grid lines can be formed through a mask and/or interferometrically into a suitable photo or electron sensitive material, such as for example photoresist, electron beam resist, photopolymer, silver halide emulsion, and dichromated gelatine. The recording process locally modifies the property of recording medium which, usually after suitable development, can be subjected to an etching and/or curing process in order to configure the recording material to modify a property of incident light. The property of incident light may be amplitude, phase and/or polarization of the light and the modification may be performed by means of diffraction, reflection, transmission, absorption, polarization and/or refraction. The microstructure of the developed, cured or etched recording medium can have a form, for instance, of surface relief, modulated transmission, modulated refractive index or their combination. The processed recording material can represent either a final product or a tool used to transfer the micro structure in to a different material, for example a more durable material, such as quartz plate, silicon, nickel, or serve as a mould or mask for a further replication process. The further replication process may comprise embossing using a master formed by the above-mentioned methods.

In summary, the above described optically variable element can be used in an optically variable device, or object (such as a sticker or a banknote etc.) that, upon illumination of incident light, provides the appearance of a three-dimensional object or surface comprised of an arrangement of a plurality of facets (i.e. provides the appearance of a three-dimensional multi-faceted construct). This image of a multi-faceted three-dimensional construct is observable by a user viewing the optically variable element upon illumination of incident light. This observation may be performed by the naked eye alone or via an instrument (e.g. microscope). The optically variable element also produces a further image having elongate elements overlying the first image.

The invention will now be described by way of example only, with reference to certain specific embodiments.

### EXAMPLES

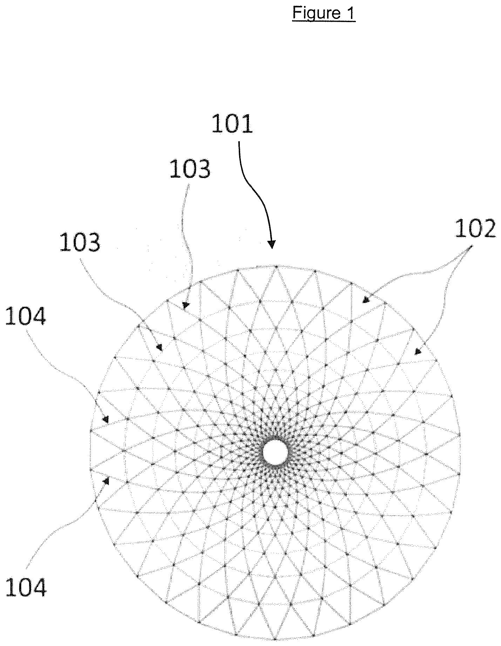

Figure 1 illustrates an embodiment of an optically variable element 101. The optically variable element 101 is depicted as being circular and comprises a plurality of optical sub-elements 102 that are arranged to form a "circular" shape. For clarity, only some of the optical sub-elements are labelled as 102 in Figure 1. In Figure 1, some lines 103 demark the boundaries of the first optical sub-elements, whilst other lines 104 demark the boundaries of the second optical sub-elements. The first optical sub-elements have a substantially triangular shape. The shape is only substantially triangular to accommodate the packing of first optical sub-elements.

A substantially triangular shaped first optical sub-element may be defined by a plurality of nodes. Each node defines a corner of the first optical sub-element. Each node is shared with at least two adjacent first optical sub-elements. Lines extending between the nodes of a first optical sub-element demark the boundary of each first optical sub-element.

When light (i.e. electromagnetic radiation having a frequency falling within the optical spectrum) is incident on the first optical sub-elements, the light reflected and/or diffracted by the first optical sub-elements of Figure 1 appears to form a three-dimensional image of a multi-faceted construct, as in Figure 3, which is a representation of primary three-dimensional object, the spherical cap of Figures 2A and 2B. The spherical cap is depicted as a primary object (smooth) in Figure 2A and with corresponding nodes and polygonal mesh for constructing facets in Figure 2B. The shape of the three-dimensional construct appears to be faceted, with each facet corresponding to a respective first optical sub-element 102 on the optically variable element 101.

Figures 3 to 5 illustrate how the optically variable element 101 of Figure 1, (giving the three-dimensional image of a three-dimensional multi-faceted construct, Figure 3), may be constructed.

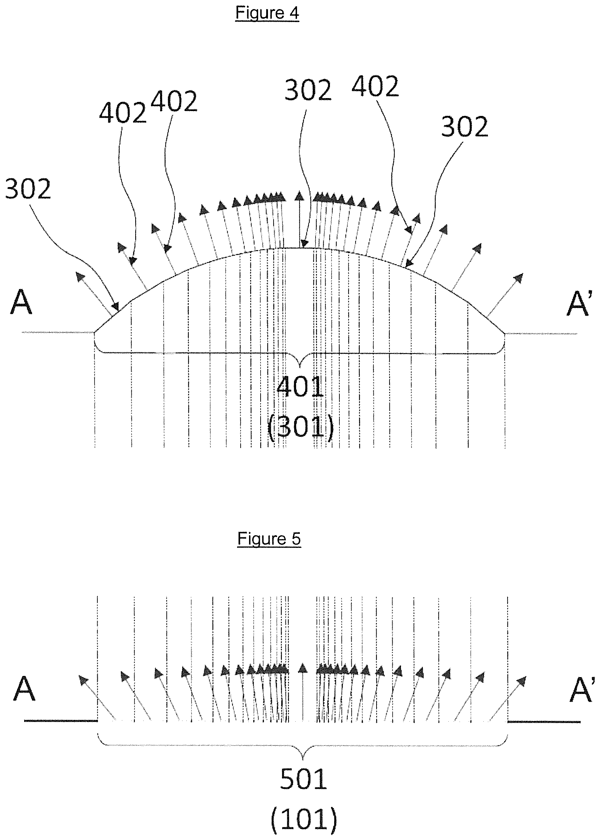

Figure 3 is a top-side view of a three-dimensional multi-faceted construct of the three-dimensional primary object depicted in Figure 2. In other words, Figure 3 appears to be looking down at the apex of the spherical cap. As previously, the facets are substantially triangular. The normal vectors to these triangular-shaped facets are depicted in cross-section in Figure 4.

The triangular-shaped facets are geodesic triangles of the portion of the sphere 201. Geodesic triangles may be formed by defining triangles having boundaries that extend along the shortest path between adjacent nodes along the sphere portion. The triangular-shaped facets are planar. Figure 3 also shows a cross-section line A-A'.

Figure 4 depicts the cross-section A-A' of Figure 3. A plurality of arrows 402 are indicative of the normal vectors of the triangular facets lying along the line A-A' in Figure 3. For a selection of facets, a projection of the nodes defining these facets onto the optically variable element 101 is depicted (Figures 4 and 5). The projection of an entire facet onto the optically variable element 101 defines, for each facet, the area of a respective optical sub-element 102 on the optical optically variable element 101.

Figure 5 depicts the boundaries of all of the triangular facets lying along the line A-A' when projected onto the optically variable element 501 (101). Also shown are arrows depicting the predominant direction of reflected and/or diffracted light incident vertically to the surface of the optically variable element 501 (101) regarding normal vectors 402 shown primarily in Figure 4). By forming first optical sub-elements on the optically variable element 101, each first optical sub-element having the associated area and boundaries of a projected geodesic facet and having the reflective and/or diffractive properties defined by the normal vector associated with that geodesic facet, an optically variable element 101 may be formed that comprises first optical sub-elements 102 having optical properties that cooperate, when light is incident thereon, to form a predefined three-dimensional image of the three-dimensional multi-faceted construct depicted in Figure 3. The three-dimensional image appears to be faceted.

It is understood that the above-described embodiment is provided by way of example only and that many other three-dimensional shapes may be imaged on an optically variable element using the methodology described in relation to Figures 1 to 5.

The methodology for forming an optically variable element that may be configured as described above may comprise the steps of Figure 6.

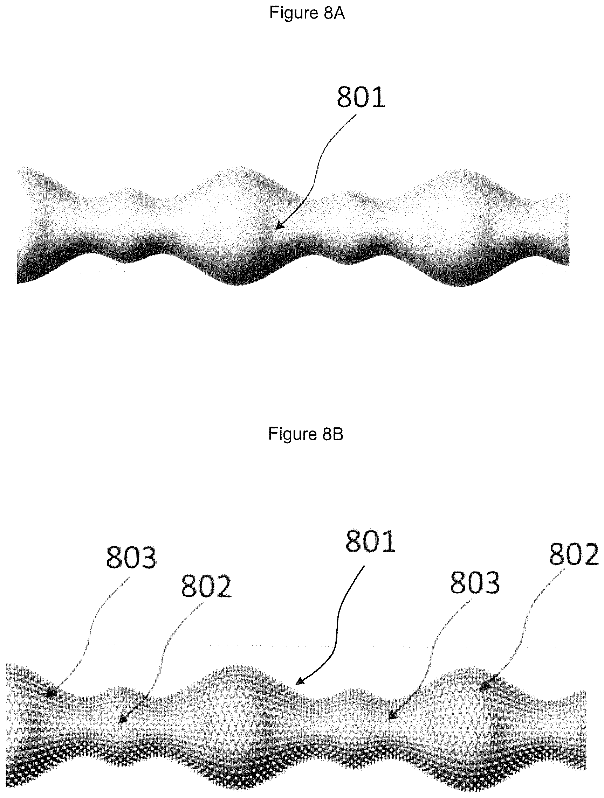

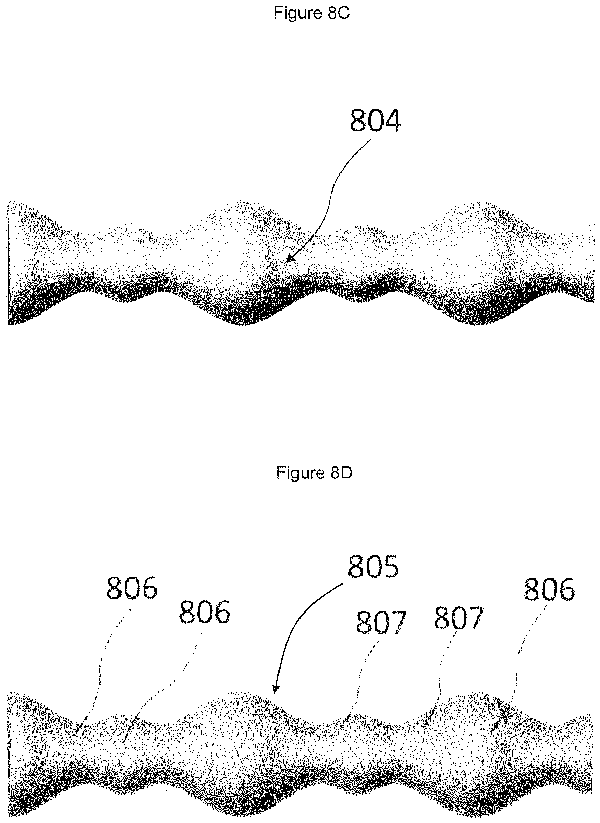

At 601, an exemplary base three-dimensional object is defined. This can be performed using computer software, such as custom or off-the-shelf computer assisted design (CAD) software. In this example, the base three-dimensional object is a sphere (or a portion thereof), as per 702 in Figure 7B. In another example, the base three-dimensional image is a series of alternating larger and smaller connected manifolds, as per 801 in Figure 8A.

At 602, an approximation of the base three-dimensional object is formed. The approximation is such as to form a multi-faceted three-dimensional construct representing the base three-dimensional object by defining facets on the surface of the base three-dimensional object. This may be done via a stepwise process. For example, in a first step, an array of nodes is defined on the surface of the three-dimensional object, as per the nodes 703 depicted in Figure 7C (not all of which are labelled for clarity) and/or the nodes 803 depicted in Figure 8B. In a second step, lines are drawn between these nodes so as to form a three-dimensional polygonal mesh forming boundaries of the facets of the multi-faceted three-dimensional construct. The facets may be tangential to the surface of the base three-dimensional object and together constitute said approximation (construct) of the base three-dimensional object. An example of a faceted approximation of the base three-dimensional object is labelled as 704 in Figure 7D, with some of the individual facets being labelled as 705 and 705a. Another example of a multi-faceted three-dimensional approximation (construct) of the base three-dimensional object is labelled as 804 in Figure 8C, with some of the individual facets being shown. The facets are defined as planar sub-elements in order to give the three-dimensional image a faceted appearance. Typically the facets have a triangular shape (or some polygonal shape that may be decomposed into triangles) and each facet has its own orientation in three-dimensional space that is given by a normal vector perpendicular to the facet plane. At least part of a boundary of a facet may be shared with (i.e. be coincident with or overlie) at least a portion of a boundary of an adjacent facet. Collectively, the facets may be described as forming a three-dimensional polygonal mesh structure which may be seen as an abstraction of the base three-dimensional object. Such an abstraction is a very specific representation of the base three-dimensional object and can be used as a distinct feature (such as for authentication and/or decoration) when applied to optical elements.

In 603, the respective normal vector associated with a particular facet is defined. As mentioned above, the normal vector of the facet is perpendicular to the facet. It is understood that the optical sub-element could have a reflective, refractive, diffractive and/or diffusive optical structure. The orientation of at least some of the normal vectors can be manipulated and/or designed in order to achieve various visual effects, such as distorted space or skewed perspective.

In 604, the boundaries of the facets are projected onto the optical plane that defines the optically variable element. The projections (which define the above-mentioned polygonal grid) define ultimate boundaries of a plurality of optical sub-elements to be formed on the optically variable element. Each of the optical sub-elements to be formed is associated with the boundaries of a respective facet and the normal vector associated with that facet.

In 605, an optically variable element is formed comprising the plurality of defined first optical sub-elements. Each first optical sub-element is formed to have a boundary defined by its associated projected facet boundary and to have the optical properties associated with its associated normal vector. In this way, an optical sub-element can reflect, refract, diffuse and/or diffract light in a similar way as its associated facet would have done i.e. as that part of the multi-faceted three-dimensional construct would have done. Therefore, the optical properties of the formed optical sub-elements cooperate such that, when lit by a given configuration of light, an image of the multi-faceted three-dimensional construct defined in 602 (i.e. the approximation/abstraction of the base three-dimensional object of 601) results.

## Claims

1. A planar optically variable element (101) comprising:
a plurality of first optical sub-elements (102), the optical properties of the first optical sub-elements (102) being configured to cooperate to form a three-dimensional image when light is incident thereon;
wherein:
the three-dimensional image is a three-dimensional image of an arrangement of facets;
the first optical sub-elements are arranged in a two-dimensional polygonal grid, wherein each of the first optical sub-elements has a boundary corresponding to a projection of a boundary between facets of the three-dimensional image such that each first optical sub-element corresponds to a respective facet of the arrangement of facets in the three-dimensional image;
each of the first optical sub-elements has at least one dimension of at least 0.1mm;
the first optical sub-elements are comprised of a micro-structure of at least one of: a reflection diffraction grating; a transmission diffraction grating; a micro-prism; and a micro-mirror;
the planar optically variable element further comprises second optical sub-elements, the optical properties of the second optical sub-elements being configured to provide an image;
the second optical sub-elements are elongate; and
the second optical sub-elements overlaid over selected boundaries between the first optical sub-elements.

2. A planar optically variable element (101) as claimed in claim 1, wherein the second optical sub-element comprises a structure capable of providing an image comprising at least one of: a diffractive image, a concealed image, a kinetic image, a polarized image, and a covert laser readable image.

3. A planar optically variable element (101) as claimed in claim 1 or claim 2, wherein the second optical sub-element comprises a structure capable of providing an image comprising at least one of: nanotext, microtext, micrographics, and nanographics.

4. An optically variable element (101) as claimed in any preceding claim, which optically variable element (101) is configured to provide one or more further three-dimensional images when light is incident thereon.

5. An optically variable element (101) as claimed in claim 4, wherein the one or more further three-dimensional images are provided by the plurality of first optical sub-elements (102) having interlaced microstructures configured for providing the one or more further three-dimensional images.

6. An optically variable element (101) as claimed in claim 4, wherein the one or more further three-dimensional images are provided by one or more further pluralities of first optical sub-elements, the optical properties of the one or more further pluralities of first optical sub-elements being configured to cooperate to form one or more further three-dimensional images.

7. An optically variable element (101) as claimed in claim 6, wherein the first optical sub-elements are configured such that at least one of the three-dimensional images is superposed over another of the three-dimensional images.

8. An optically variable element (101) as claimed in claim 6, wherein the first optical sub-elements are configured such that at least one of the three-dimensional images does not overlap with at least one other of the three-dimensional images.

9. An optically variable element as claimed in any preceding claim, wherein the second optical sub-element is comprised of a micro-structure of at least one of: a reflection diffraction grating; a transmission diffraction grating; a micro-prism; and a micro-mirror.

10. A device or object comprising an optically variable element as defined in any preceding claim.

11. A method for producing a planar optically variable element comprising:
providing a plurality of first optical sub-elements, the optical properties of the first optical sub-elements being configured to cooperate to form a three-dimensional image of an arrangement of facets when light is incident thereon;
wherein each first optical sub-element corresponds to a facet of the arrangement of facets in the three-dimensional image, and has at least one dimension of at least 0.1 mm;
wherein providing the plurality of first optical sub-elements comprises:
defining a three-dimensional surface;
creating an array of nodes on the three-dimensional surface;
using the nodes to define a plurality of facets such that the plurality of facets form said arrangement of facets, the arrangement of facets approximating the three-dimensional surface;
projecting the surface area of each facet of said arrangement onto a plane defined by the optically variable element; and
forming the plurality of first optical sub-elements by incorporating a unique optically active structure into each projected surface area;
wherein the method further comprises providing second optical sub-elements, the optical properties of the second optical sub-elements being configured to provide an image,
wherein the second optical sub-elements are substantially elongate;
wherein the second optical sub-elements are overlaid over selected boundaries between first optical sub-elements; and
wherein the first optical sub-elements are comprised of a micro-structure of at least one of: a reflection diffraction grating; a transmission diffraction grating; a micro-prism; and a micro-mirror.

## Patentansprüche

1. Planares optisch variables Element (101), aufweisend:
mehrere erste optische Teilelemente (102), wobei die optischen Eigenschaften der ersten optischen Teilelemente (102) konfiguriert sind, um zusammenzuwirken, um ein dreidimensionales Bild zu bilden, wenn Licht darauf einfällt;
wobei:
das dreidimensionale Bild ein dreidimensionales Bild einer Anordnung von Facetten ist;
die ersten optischen Teilelemente in einem zweidimensionalen polygonalen Gitter angeordnet sind, wobei jedes der ersten optischen Teilelemente eine Grenze hat, die einer Projektion einer Grenze zwischen Facetten des dreidimensionalen Bildes so entspricht, dass jedes erste optische Teilelement einer jeweiligen Facette der Anordnung von Facetten im dreidimensionalen Bild entspricht;
jedes der ersten optischen Teilelemente wenigstens eine Abmessung von mindestens 0,1 mm hat;
die ersten optischen Teilelemente aus einer Mikrostruktur von wenigstens einem bestehen von: einem Reflexionsbeugungsgitter; einem Transmissionsbeugungsgitter; einem Mikroprisma; und einem Mikrospiegel;
das planare optisch variable Element ferner zweite optische Teilelemente aufweist, wobei die optischen Eigenschaften der zweiten optischen Teilelemente konfiguriert sind, um ein Bild bereitzustellen;
die zweiten optischen Teilelemente länglich sind; und
die zweiten optischen Teilelemente über ausgewählte Grenzen zwischen den ersten optischen Teilelementen überlagert sind.

2. Planares optisch variables Element (101) nach Anspruch 1, wobei das zweite optische Teilelement eine Struktur aufweist, die in der Lage ist, ein Bild bereitzustellen, das wenigstens eines aufweist von: einem beugenden Bild, einem verdeckten Bild, einem kinetischen Bild, einem polarisierten Bild und einem verdeckten laserlesbaren Bild.

3. Planares optisch variables Element (101) nach Anspruch 1 oder Anspruch 2, wobei das zweite optische Teilelement eine Struktur aufweist, die ein Bild bereitstellen kann, das wenigstens eines aufweist von: Nanotext, Mikrotext, Mikrografik und Nanografik.

4. Optisch variables Element (101) nach einem der vorhergehenden Ansprüche, wobei das optisch variable Element (101) konfiguriert ist, um ein oder mehr weitere dreidimensionale Bilder bereitzustellen, wenn Licht darauf einfällt.

5. Optisch variables Element (101) nach Anspruch 4, wobei die ein oder mehr weiteren dreidimensionalen Bilder von den mehreren ersten optischen Teilelementen (102) bereitgestellt werden, die verschachtelte Mikrostrukturen haben, die zum Bereitstellen der ein oder mehr weiteren dreidimensionalen Bilder konfiguriert sind.

6. Optisch variables Element (101) nach Anspruch 4, wobei die ein oder mehr weiteren dreidimensionalen Bilder von ein oder mehr weiteren Mehrheiten von ersten optischen Teilelementen bereitgestellt werden, wobei die optischen Eigenschaften der ein oder mehr weiteren Mehrheiten von ersten optischen Teilelementen konfiguriert sind, um zusammenzuwirken, um ein oder mehr weitere dreidimensionale Bilder zu bilden.

7. Optisch variables Element (101) nach Anspruch 6, wobei die ersten optischen Teilelemente so konfiguriert sind, dass wenigstens eines der dreidimensionalen Bilder einem anderen der dreidimensionalen Bilder überlagert wird.

8. Optisch variables Element (101) nach Anspruch 6, wobei die ersten optischen Teilelemente so konfiguriert sind, dass wenigstens eines der dreidimensionalen Bilder nicht mit wenigstens einem anderen der dreidimensionalen Bilder überlappt.

9. Optisch variables Element nach einem der vorhergehenden Ansprüche, wobei das zweite optische Teilelement aus einer Mikrostruktur von wenigstens einem besteht von: einem Reflexionsbeugungsgitter; einem Transmissionsbeugungsgitter; einem Mikroprisma; und einem Mikrospiegel.

10. Vorrichtung oder Objekt mit einem optisch variablen Element nach einem der vorhergehenden Ansprüche.

11. Verfahren zur Herstellung eines planaren optisch variablen Elements, aufweisend:
Bereitstellen von mehreren ersten optischen Teilelementen, wobei die optischen Eigenschaften der ersten optischen Teilelemente konfiguriert sind, um zusammenzuwirken, um ein dreidimensionales Bild einer Anordnung von Facetten zu bilden, wenn Licht darauf einfällt;
wobei jedes erste optische Teilelement einer Facette der Anordnung von Facetten im dreidimensionalen Bild entspricht und wenigstens eine Abmessung von mindestens 0,1 mm hat;
wobei das Bereitstellen der mehreren ersten optischen Teilelementen aufweist:
Definieren einer dreidimensionalen Fläche;
Erzeugen einer Anordnung von Knoten auf der dreidimensionalen Fläche;
Verwenden der Knoten, um mehrere Facetten so zu definieren, dass die mehreren Facetten die Anordnung von Facetten bilden, wobei die Anordnung von Facetten die dreidimensionale Fläche annähert;
Projizieren des Flächenbereichs jeder Facette der Anordnung auf eine durch das optisch variable Element definierte Ebene; und
Bilden der mehreren ersten optischen Teilelementen durch Einbringen einer einzigartigen optisch aktiven Struktur in jeden projizierten Flächenbereich;
wobei das Verfahren ferner ein Bereitstellen von zweiten optischen Teilelementen aufweist, wobei die optischen Eigenschaften der zweiten optischen Teilelemente konfiguriert sind, um ein Bild bereitzustellen,
wobei die zweiten optischen Teilelemente im Wesentlichen länglich sind;
wobei die zweiten optischen Teilelemente über ausgewählte Grenzen zwischen ersten optischen Teilelementen überlagert werden; und
wobei die ersten optischen Teilelemente aus einer Mikrostruktur von wenigstens einem bestehen von: einem Reflexionsbeugungsgitter; einem Transmissionsbeugungsgitter; einem Mikroprisma; und einem Mikrospiegel.

## Revendications

1. Elément plan optiquement variable (101) comprenant :
une pluralité de premiers sous-éléments optiques (102), les propriétés optiques des premiers sous-éléments optiques (102) étant configurées pour coopérer pour former une image tridimensionnelle lorsque de la lumière incidente arrive dessus,
dans lequel :
l'image tridimensionnelle est une image tridimensionnelle d'un agencement de facettes ;
les premiers sous-éléments optiques sont agencés en une grille polygonale bidimensionnelle, dans lequel chacun des premiers sous-éléments optiques a une délimitation correspondant à une projection d'une délimitation entre des facettes de l'image tridimensionnelle de sorte que chaque premier sous-élément optique correspond à une facette respective de l'agencement de facettes dans l'image tridimensionnelle ;
chacun des premiers sous-éléments optiques a au moins une dimension d'au moins 0,1 mm ;
les premiers sous-éléments optiques sont constitués d'une microstructure d'au moins l'un parmi : un réseau de diffraction en réflexion, un réseau de diffraction en transmission, un microprisme et un micromiroir ;
l'élément plan optiquement variable comprend en outre des deuxièmes sous-éléments optiques, les propriétés optiques des deuxièmes sous-éléments optiques étant configurées pour fournir une image ;
les deuxièmes sous-éléments optiques sont allongés ; et
les deuxièmes sous-éléments optiques sont superposés sur des délimitations entre des premiers sous-éléments optiques, lesquelles délimitations sont sélectionnées.

2. Elément plan optiquement variable (101) selon la revendication 1, dans lequel le deuxième sous-élément optique comprend une structure capable de fournir une image comprenant au moins l'une parmi : une image diffractive, une image masquée, une image cinétique, une image polarisée et une image cachée lisible par laser.

3. Elément plan optiquement variable (101) selon la revendication 1 ou 2, dans lequel le deuxième sous-élément optique comprend une structure capable de fournir une image comprenant au moins l'un parmi : un nanotexte, un microtexte, une micrographie et une nanographie.

4. Elément plan optiquement variable (101) selon l'une quelconque des revendications précédentes, lequel élément plan optiquement variable (101) est configuré pour fournir une ou plusieurs images tridimensionnelles supplémentaires lorsque de la lumière incidente arrive dessus.

5. Elément plan optiquement variable (101) selon la revendication 4, dans lequel lesdites une ou plusieurs images tridimensionnelles supplémentaires sont fournies par la pluralité de premiers sous-éléments optiques (102) ayant des microstructures entrelacées qui sont configurées pour fournir lesdites une ou plusieurs images tridimensionnelles supplémentaires.

6. Elément plan optiquement variable (101) selon la revendication 4, dans lequel lesdites une ou plusieurs images tridimensionnelles supplémentaires sont fournies par une ou plusieurs pluralités supplémentaires de premiers sous-éléments optiques, les propriétés optiques desdites une ou plusieurs pluralités supplémentaires de premiers sous-éléments optiques étant configurées pour coopérer pour former une ou plusieurs images tridimensionnelles supplémentaires.

7. Elément plan optiquement variable (101) selon la revendication 6, dans lequel les premiers sous-éléments optiques sont configurés de sorte qu'au moins l'une des images tridimensionnelles est superposée sur une autre des images tridimensionnelles.

8. Elément plan optiquement variable (101) selon la revendication 6, dans lequel les premiers sous-éléments optiques sont configurés de sorte qu'au moins une des images tridimensionnelles ne chevauche pas au moins une autre des images tridimensionnelles.

9. Elément plan optiquement variable selon l'une quelconque des revendications précédentes, dans lequel le deuxième sous-élément optique est constitué d'une microstructure d'au moins l'un parmi : un réseau de diffraction en réflexion, un réseau de diffraction en transmission, un microprisme et un micromiroir.

10. Dispositif ou objet comprenant un élément optiquement variable tel que défini selon l'une quelconque des revendications précédentes.

11. Procédé de production d'un élément plan optiquement variable, consistant à :
fournir une pluralité de premiers sous-éléments optiques, les propriétés optiques des premiers sous-éléments optiques étant configurées pour coopérer pour former une image tridimensionnelle d'un agencement de facettes lorsque de la lumière incidente arrive dessus,
dans lequel chaque premier sous-élément optique correspond à une facette de l'agencement de facettes dans l'image tridimensionnelle, et a au moins une dimension d'au moins 0,1 mm,
dans lequel l'étape consistant à fournir la pluralité de premiers sous-éléments optiques consiste à :
définir une surface tridimensionnelle ;
créer un réseau de noeuds sur la surface tridimensionnelle ;
utiliser les noeuds pour définir une pluralité de facettes de sorte que la pluralité de facettes forme ledit agencement de facettes, l'agencement de facettes se rapprochant de la surface tridimensionnelle ;
projeter la surface de chaque facette dudit agencement sur un plan défini par l'élément optiquement variable ; et
former la pluralité de premiers sous-éléments optiques en incorporant une seule structure optiquement active dans chaque surface projetée,
dans lequel le procédé consiste en outre à fournir des deuxièmes sous-éléments optiques, les propriétés optiques des deuxièmes sous-éléments optiques étant configurées pour fournir une image,
dans lequel les deuxièmes sous-éléments optiques sont essentiellement allongés,
dans lequel les deuxièmes sous-éléments optiques sont superposés sur des délimitations entre des premiers sous-éléments optiques, lesquelles délimitations sont sélectionnées, et
dans lequel les premiers sous-éléments optiques sont constitués d'une microstructure d'au moins l'un parmi : un réseau de diffraction en réflexion, un réseau de diffraction en transmission, un microprisme et un micromiroir.
